# EUROPÄISCHE PATENTSCHRIFT

(11) **EP 1 613 941 B1**
(45) Veröffentlichungstag und Bekanntmachung des Hinweises auf die Patenterteilung: **23.04.2008**
(21) Anmeldenummer: 04725597.1
(22) Anmeldetag: 03.04.2004
(51) Int. Cl.: G01M 3/32

(54) **VORRICHTUNG ZUR SCHNELLEN VAKUUMKONTROLLE**
DEVICE FOR RAPID VACUUM CONTROL
DISPOSITIF SERVANT A REALISER RAPIDEMENT UN CONTROLE DE VIDE

(30) Priorität: 12.04.2003 DE 10316902
(43) Veröffentlichungstag der Anmeldung: 11.01.2006
(73) Patentinhaber: Forschungszentrum Jülich GmbH, 52425 Jülich (DE)
(72) Erfinder: KILIAN, Kurt, 52428 Jülich (DE); ABDEL-BARY, Mamdouh Atomic Energy Authority, 13759 Abu Zabaal (EG); DOLFUS, Norbert, 52445 Titz (DE); SEFZICK, Thomas, 52441 Linnich (DE)
(86) Internationale Anmeldenummer: PCT/DE2004/000695
(87) Internationale Veröffentlichungsnummer: WO 2004/092627

(56) Entgegenhaltungen:
- DE-A- 3 711 293
- DE-A- 19 906 054
- FR-A- 1 327 732
- US-A- 3 675 072
- US-A- 4 424 825
- US-A- 5 526 678

## Beschreibung

Die Erfindung betrifft einen Vakuumbehälter, der Einbauten enthält. Beispiele für einen erfindungsgemäßen Vakuumbehälter mit Einbauten sind Linear- und Kreisbeschleuniger, Zyklotrons, Aufdampfanlagen, Vakuumanlagen zum Löten, Schweißen, Sintern, Sputtern, Trocknen, Vakuumanlagen für wissenschaftliche Experimente. Die Erfindung betrifft ferner ein Verfahren für den Betrieb des Vakuumbehälters mit den Einbauten.

Einbauten sind regelmäßig teuer und empfindlich. Bei Lufteinbruch in das Vakuumsystem können an den Einbauten erhebliche Schäden entstehen. Beispiele für solche erfindungsgemäßen Einbauten sind Glühkathoden, hochspannungsführende Elektroden, Heizungen, Schmelzgut, Öfen, Getterpumpen oder Turbopumpen. Schäden können ferner am Vakuumsystem entstehen.

Aus der DE 37 11 293 A1 ist ein schnell schließendes Ventil zum Schutz von Einbauten in Vaku umbehältern bei Lufteinbruch bekannt. Die Auslösung des Schließvorgangs erfolgt über Drucksensoren im Vakuumbehälter oder auch über Fensterbruchdetektoren speziell an besonders dünnen Fenstern.

Die DE 199 06 054 A1 offenbart ein schnell schließendes Ventil, welches als Antrieb für den Schließvorgang eine Explosions- oder Treibladung verwendet.

In der US 4,424,825 wird ein elektromagnetischer Antrieb verwendet, um ein Ventil schnell zu schließen, wobei der Elektromagnet über eine geladene Kondensatorbank kurzzeitig mit einem sehr hohen Strom beaufschlagt wird.

In der US 3,765,072 wird ein federbelastetes Ventil elektromagnetisch offen gehalten und durch die Federkraft geschlossen, wenn die die Stromversorgung des Elektromagneten unterbrochen wird. Der Vakuumbehälter enthält Blenden, die eine durch einbrechende Luft bewirkte Schockwelle verzögern, so dass diese das Ventil erst erreicht, wenn es geschlossen ist. Der Lufteinbruch wird durch das Zünden einer Zündkerze registriert.

Die US 5,526,678 offenbart eine Anordnung aus mehreren Kathodenionisations-Drucksensoren in einem Vakuumbehälter. Eine Auswerteeinheit vergleicht die Geschwindigkeit des Druckanstiegs, die die verschiedenen Sensoren messen, so dass der Ort des Lufteinbruchs bestimmt werden kann.

Aus der FR 1 327 732 ist ein Verfahren zur Erkennung eines Lufteinbruchs in einen Vakuumbehälter bekannt, bei dem der Vakuumbehälter mit einem Detektor auf das Vorhandensein von auch in Luft enthaltenem Argon überwacht wird.

Nachteilig dauert es nach dem Stand der Technik zu lange, einen Lufteinbruch zu erkennen und empfindliche Einbauten mit Ventilen abzuschotten. Je nach Schwere des Lufteinbruchs steigt der Druck an den Einbauten so schnell, dass diese bereits beschädigt sind, bevor das Ventil vollständig geschlossen ist.

Der Erfindung liegt die Aufgabe zugrunde, möglichen Beschädigungen an Einbauten und am Vakuumsystem infolge von Lufteinbruch entgegenzuwirken.

Die Aufgabe der Erfindung wird durch einen Vakuumbehälter mit den Merkmalen des ersten Anspruchs und durch ein Verfahren mit den Merkmalen des neunten Anspruchs gelöst. Vorteilhafte Ausgestaltungen ergeben sich aus den Unteransprüchen.

Der anspruchsgemäße Vakuumbehälter mit Einbauten ist in Segmente unterteilt, wobei die Segmente zumindest über Ventile miteinander in Verbindung stehen, wobei innerhalb des Vakuumbehälters sich wenigstens ein Sensor befindet, der durch Gaseinbruch verursachte Druckveränderungen innerhalb des Behälters registriert, wobei die registrierten Druckänderungen zur Steuerung
- des Schliessvorgangs der genannten Ventile und/oder
- des Abschaltens der Energiezufuhr zu den Einbauten
dienen, damit Beschädigungen der Einbauten vermieden werden können, wobei der Sensor ein Mikrofon ist.

Wird ein Gaseinbruch, also eine entsprechende Druckveränderung registriert, so können Gegenmaßnahmen eingeleitet werden, die Beschädigungen an den Einbauten vermeiden. Typische Einbauten sind in der Beschreibungseinleitung genannt. Eine besonders wirkungsvolle Gegenmaßnahme stellt das Schließen von Ventilen bei Lufteinbruch dar. Mit Hilfe von Sensoren wird das Schließen von Ventilen daher in Abhängigkeit von Druckveränderungen gesteuert. Registriert ein Sensor also einen Druckanstieg, der von einem Lufteinbruch herrührt, so werden Ventile geschlossen. Die entsprechenden Segmente werden so vom Lufteinbruch ausgenommen. Die in den Segmenten befindlichen Einbauten können durch den Lufteintritt regelmäßig nicht beschädigt werden. Dies gilt insbesondere dann, wenn die Sensoren und die Ventile so ausgelegt und verteilt sind, dass der Lufteinbruch hinreichend schnell registriert und die Ventile hinreichend schnell geschlossen werden können. Bei der Auslegung sowie der Wahl der Anzahl und Positionierung der

Ventile ist die Ausbreitungsgeschwindigkeit einer Druckwelle zu bedenken. Die Sensoren sind dann so zu platzieren und innerhalb des Vakuumbehälters zu verteilen, dass ein Lufteinbruch registriert und Ventile geschlossen werden, bevor die Druckwelle die Segmente zu erreichen vermag.

Typischerweise werden daher Sensoren in großer Zahl innerhalb des Vakuumbehälters eingesetzt. Als Sensor wird ein akustischer Sensor und zwar insbesondere ein Mikrofon mit einer Bandbreite oberhalb von 15 kHz, bevorzugt. Die Sensoren sind preiswert und leicht erhältlich. Bandbreiten oberhalb von 15 kHz reichen regelmäßig aus, um einen Lufteinbruch im Sinne der Erfindung registrieren zu können. Bandbreiten oberhalb von 30 kHz werden eingesetzt, wenn die Ansprechzeit herabgesetzt und damit das Registrieren eines Lufteinbruchs beschleunigt werden soll.

Sensoren innerhalb des Vakuumbehälters weisen daher untereinander typischerweise einen Abstand von bis zu 2 Metern, bevorzugt von bis zu 1 Meter auf. Je nach Anwendungsfall wird vom Fachmann ein anderer Abstand gewählt, um so einen Lufteinbruch nicht in angrenzende Segmente vordringen zu lassen. Mehr als 5 Sensoren, insbesondere mehr als 10 Sensoren werden daher wenigstens eingesetzt. Ohne weiteres, je nach Größe oder Ausdehnung des Vakuumbehälters, können jedoch auch 50 oder mehr als 100 Sensoren innerhalb des Behälters verteilt sein.

Typischerweise verteilen sich die Sensoren dann auf mehrere Segmente, da schließlich nicht vorhersehbar ist, in welchem Segment ein Störungsfall aufgrund von Lufteintritt auftritt.

Ein typisches Anwendungsgebiet stellen Linear-oder Kreisbeschleuniger dar.

Teure Einbauten innerhalb eines Vakuumbehälters befinden sich dann bevorzugt in eigenen Behältern innerhalb der Kammer, die dann Segmente im Sinne der Erfindung darstellen. Die Kammern können also durch Ventile von den übrigen Bereichen gasdicht abgetrennt werden.

Die Ventile sind bevorzugt so beschaffen, dass sie elektrisch gesteuert geöffnet und geschlossen werden können. Strom breitet sich erheblich schnelle als Luft aus. Damit ist sichergestellt, dass an die Ventile im Falle eines Lufteinbruchs das Signal zum Schließen schnell genug weitergeleitet wird. Es können normale, käufliche Schnellschlussventile verwendet werden. Hinreichend sind solche, die innerhalb von 20 ms Öffnungen von 65 mm Durchmesser zu schließen vermögen. Größere Durchmesser und kürzere Schließzeiten sind möglich.

In einer bevorzugten Ausführungsform umfasst der Vakuumbehälter eine Auswerteeinheit, mit der der Ort eines Lecks im Vakuumbehälter durch einen Vergleich von Signalzeiten und Frequenzspektren von Sensoren ermittelt werden kann. Gerade bei ausgedehnten Vakuumbehältern wie bei einem Kreisbeschleuniger ist es nicht einfach, Lecks zu lokalisieren. Erfindungsgemäß gelingt es nun besonders schnell, den Ort des Lecks aufzuspüren und den Schaden zu beheben. Folgeschäden können entsprechend verbessert vermieden werden.

Bevorzugt wird ein hochempfindlicher Sensor eingesetzt. Ein Sensor ist hochempfindlich im Sinne der Erfindung, wenn dieser einen Druckanstieg im Bereich unter 1 mbar innerhalb von 10⁻³ Sekunden zu registrieren vermag.

Die Sensoren sind ferner bevorzugt so ausgewählt, dass diese nicht auf Schallschwingungen ansprechen. Mechanische Schläge auf die Apparatur führen dann also nicht dazu, dass die Sensoren bzw. Mikrofone ansprechen. Realisiert wird dies durch Sensoren, bei denen die schallaufnehmenden Bauteile, also insbesondere entsprechende Membranen der Sensoren eine hinreichend geringe Masse haben. Im Vakuum sprechen die Sensoren dann nicht auf durch Schall verursachte Druckveränderungen an.

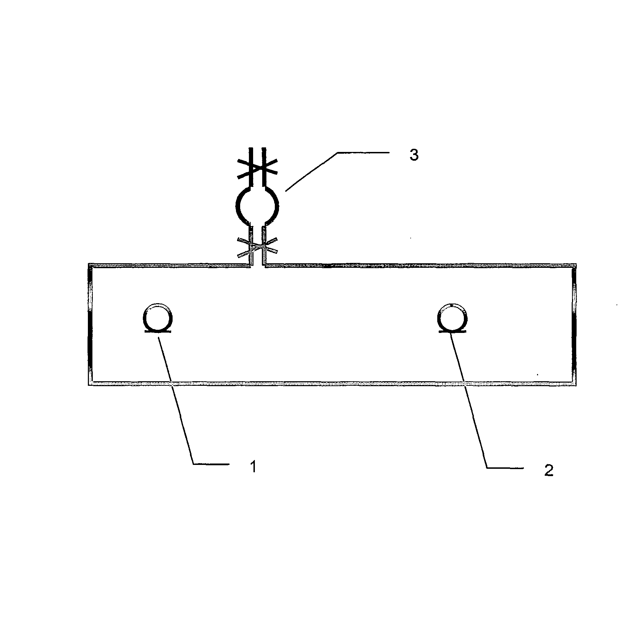

Die Figur skizziert eine Vakuumapparatur mit zwei Mikrophonen 1 und 2 (Sensoren) und einem Testleck 3.

Die Zeit zwischen dem Auftreffen der Schockfront auf dem Mikrofon und dem Vorliegen eines Diskriminatorsignals, das den Anstieg der Mikrophonspannung anzeigt, liegt bei genügendem Schalldruck oberhalb von 0,1 mbar im Bereich der inversen Grenzfrequenz unterhalb von 10⁻⁴ s. Alle weiteren Zeiten, die in der elektrischen Signalverarbeitung auftreten, können vernachlässigt werden gegenüber der vergleichsweise sehr langsamen Schallausbreitung.

Innerhalb einer Sensoransprechzeit unterhalb von 10⁻⁴ s breitet sich die Gasdruckfront bei einer Geschwindigkeit von ca. 300 m/s nur um 3 cm aus.

Zeitdifferenzen zwischen zwei Mikrophonen erlauben es, Entfernungsunterschiede zur Gasquelle zu bestimmen, wie das folgende Beispiel zeigt. Die Distanz zwischen zwei Mikrofonen in einem Rohr betrage 2 m. Spricht das Mikrofon 1 um 1/300 s schneller an als das Mikrofon 2, so ergibt sich bei einer angenommenen Ausbreitungsgeschwindigkeit des Gases von 300 m/s, dass sich das Leck 50 cm von Mikrofon 1 und 150 cm von Mikrofon 2 entfernt befindet. Erfindungsgemäß können die Signale also nicht nur zum Verschließen von Ventilen, sondern auch zur Bestimmung der Position des Lecks genutzt werden.

Erfindungsgemäß werden Einbauten in einem Vakuumsystem geschützt, indem Betriebszustände, durch welche bei Druckanstieg Schäden entstehen können, verändert werden, sobald ein Sensor einen Druckanstieg registriert. Hierzu kann das Abschalten von Strom gehören, das Abschalten von Hochfrequenzsendern in Beschleunigern, Abschalten von heißen Öfen oder Glühkathoden, Hochspannung von Glimmentladungen oder Sputtering oder Plasmaanlagen, Ausschalten von Kälteanlagen, um Kondensatbildung zu verringern.

## Patentansprüche

1. Vakuumbehälter mit Einbauten, der in Segmente unterteilt ist, wobei die Segmente zumindest über Ventile miteinander in Verbindung stehen, wobei innerhalb des Vakuumbehälters sich wenigstens ein Sensor befindet, der durch Gaseinbruch verursachte Druckveränderungen innerhalb des Behälters registriert, wobei die registrierten Druckänderungen zur Steuerung
- des Schliessvorgangs der genannten Ventile und/oder
- des Abschaltens der Energiezufuhr zu den Einbauten
dienen, damit Beschädigungen der Einbauten vermieden werden können,
**dadurch gekennzeichnet,**
**dass** der Sensor ein Mikrofon ist.

2. Vakuumbehälter nach Anspruch 1, **gekennzeichnet durch** ein Mikrofon mit einer Bandbreite oberhalb von 15 kHz, bevorzugt oberhalb von 30 kHz.

3. Vakuumbehälter nach einem der vorhergehenden Ansprüche mit mehreren Mikrofonen, die untereinander einen Abstand von bis zu 2 Metern, bevorzugt von bis zu 1 Meter aufweisen, wobei insbesondere mehr als 5 Mikrofone, besonders bevorzugt mehr als 10 Mikrofone eingesetzt sind.

4. Vakuumbehälter nach Anspruch 3, bei dem die Mikrofone sich in unterschiedlichen Segmenten befinden.

5. Vakuumbehälter nach einem der vorhergehenden Ansprüche, der als ein Teil eines Linear- oder Kreisbeschleunigers anordnenbar ist.

6. Vakuumbehälter nach einem der vorhergehenden Ansprüche, bei dem mehrere Mikrofone nahe an kritischen Stellen, wo Lecks entstehen können, insbesondere in der Nähe von dünnen Fenstern, Ventilen, bruchgefährdete Stellen angebracht sind.

7. Vakuumbehälter nach einem der vorhergehenden Ansprüche mit einer Auswerteeinheit, mit der der Ort eines Lecks im Vakuumbehälter durch einen Vergleich von Signalzeiten und Frequenzspektren von Mikrofonen ermittelt werden kann.

8. Vakuumbehälter nach einem der vorhergehenden Ansprüche, bei dem sich Einbauten in unterschiedlichen Segmenten befinden, wobei das Volumen von Segmenten mit Einbauten bevorzugt wesentlich kleiner als das Gesamtvolumen des Vakuumbehälters ist.

9. Verfahren für den Schutz von Einbauten in einem Vakuumsystem, das in Segmente unterteilt ist, die über Ventile miteinander in Verbindung stehen, wobei
- Ventile innerhalb des Vakuumbehälters geschlossen werden und/oder
- die Energiezufuhr zu den Einbauten abgeschaltet wird,
wenn ein Sensor einen durch einen Gaseinbruch verursachten Druckanstieg innerhalb des Behälters registriert,
**dadurch gekennzeichnet,**
**dass** der Sensor ein Mikrofon ist.

10. Verfahren für den Schutz von Einbauten in einem Vakuumsystem nach dem vorhergehenden Anspruch, bei dem Betriebszustände, durch welche bei Druckanstieg Schäden entstehen können, verändert werden, wenn ein Mikrofon einen Druckanstieg registriert.

## Claims

1. Vacuum container with inserts, which is divided into segments, with the segments at least standing in connection with each other via valves,
where within the vacuum container at least one sensor is located, which registers pressure changes within the container caused by gas penetration, with the pressure changes registered serving for control
- of the closure process of the said valves and/or
- of the switching off of the energy supply to the inserts,
so that damaging of the inserts can be avided,
**characterised by** the fact
that the sensor is a microphone.

2. Vacuum container according to claim 1, **characterised by** a microphone with a band width of over 15 kHz, preferably of over 30 kHz.

3. Vacuum container according to one of the foregoing claims with several microphones, which exhibit a distance between each other of up to 2 metres, preferably of up to 1 metre, with in particular more than 5 microphones, particularly preferably more than 10 microphones being installed.

4. Vacuum container according to claim 3, in which the microphones are situated in different segments.

5. Vacuum container according to one of the foregoing claims, which can be fitted as a part of a linear or circuit accelerator.

6. Vacuum container according to one of the foregoing claims, in which several microphones can be installed near to critical places where leaks may occur, in particular in the vicinity of thin windows, valves, places in danger of breaking.

7. Vacuum container according to one of the foregoing claims with an evaluation unit, with which the place of a leak in the vacuum container can be ascertained by a comparison of signal times and frequency spectra of microphones.

8. Vacuum container according to one of the foregoing claims, in which inserts are situated in different segments, where the volume of segments with inserts is preferably substantially smaller than the total volume of the vacuum container.

9. Procedure for the protection of inserts in a vacuum system which is divided into segments which stand in connection with each other via valves, where
- valves within the vacuum container are closed and/or
- the energy supply to the inserts is switched off
when a sensor registers a rise in pressure within the container caused by a gas penetration,
**characterised by** the fact
that the sensor is a microphone.

10. Procedure for the protection of inserts in a vacuum system according to the previous claim, in which operating states through which damage may occur with rise in pressure can be altered when a microphone registers a rise in pressure.

## Revendications

1. Récipient à vide comprenant des éléments encastrés, qui est divisé en segments, les segments étant reliés les uns aux autres au moins par l'intermédiaire de soupapes, au moins un capteur se situant à l'intérieur du récipient à vide, lequel capteur enregistre les variations de pression à l'intérieur du récipient provoquées par des irruptions de gaz, les variations de pression enregistrées servant à commander
- le processus de fermeture des soupapes citées et/ou
- l'arrêt de l'amenée d'énergie aux éléments encastrés
afin que des détériorations des éléments encastrés puissent être évitées,
**caractérisé en ce que**
le capteur est un microphone.

2. Récipient à vide selon la revendication 1, **caractérisé par** un microphone comprenant une largeur de bande supérieure à 15 kHz, de préférence supérieure à 30 kHz.

3. Récipient à vide selon l'une quelconque des revendications précédentes comprenant plusieurs microphones, qui présentent entre eux une distance allant jusqu'à 2 mètres, de préférence allant jusqu'à 1 mètre, en particulier plus de 5 microphones, de manière particulièrement préférée plus de 10 microphones étant utilisés.

4. Récipient à vide selon la revendication 3, dans lequel les microphones se situent dans différents segments.

5. Récipient à vide selon l'une quelconque des revendications précédentes, qui peut être disposé comme partie d'un accélérateur linéaire ou circulaire.

6. Récipient à vide selon l'une quelconque des revendications précédentes, dans lequel plusieurs microphones sont aménagés à proximité de points critiques, où des fuites peuvent se produire, en particulier à proximité de fenêtres minces, soupapes, de points exposés à des fractures.

7. Récipient à vide selon l'une quelconque des revendications précédentes comprenant une unité d'analyse, avec laquelle le point d'une fuite dans le récipient à vide peut être déterminé par une comparaison des intervalles et spectres de fréquence des microphones.

8. Récipient à vide selon l'une quelconque des revendications précédentes, dans lequel des éléments encastrés se situent dans différents segments, le volume des segments comprenant les éléments encastrés étant de préférence sensiblement inférieur au volume total du récipient à vide.

9. Procédé pour la protection d'éléments encastrés dans un système à vide, qui est divisé en différents segments, qui sont reliés les uns aux autres par des soupapes,
- les soupapes à l'intérieur du récipient à vide étant fermées et/ou
- l'amenée d'énergie aux éléments encastrés étant stoppée,
lorsqu'un capteur enregistre une augmentation de pression provoquée par une irruption de gaz à l'intérieur du récipient,
**caractérisé en ce que**
le capteur est un microphone.

10. Procédé pour la protection d'éléments encastrés dans un système de vide selon l'une quelconque des revendications précédentes, dans lequel les états de marche, par lesquels lors d'une augmentation de pression, des détériorations peuvent se produire, sont modifiés lorsqu'un microphone enregistre une augmentation de pression.
